(19) Europäisches Patentamt
European Patent Office
Office européen des brevets

(11) **EP 4 146 544 B1**

## (12) EUROPEAN PATENT SPECIFICATION

(45) Date of publication and mention
of the grant of the patent:
**11.12.2024   Bulletin 2024/50**

(21) Application number: **21725107.3**

(22) Date of filing: **07.05.2021**

(51) International Patent Classification (IPC):
**B64D 27/24** (2024.01)      **B64D 31/06** (2024.01)
**B64D 35/08** (2006.01)      **G09B 9/10** (2006.01)
**G09B 9/44** (2006.01)      **B64D 27/02** (2006.01)

(52) Cooperative Patent Classification (CPC):
**B64D 27/24; B64D 27/02; B64D 27/026;**
**B64D 31/06; B64D 35/08; G09B 9/10;**
B64D 2221/00; Y02T 50/60

(86) International application number:
**PCT/EP2021/062217**

(87) International publication number:
**WO 2021/224490 (11.11.2021 Gazette 2021/45)**

(54) **DISTRIBUTED ELECTRIC PROPULSION AIRCRAFT SIMULATING A SINGLE PROPELLER AIRCRAFT**

FLUGZEUG MIT VERTEILTEM ELEKTRISCHEN ANTRIEB, DAS EIN FLUGZEUG MIT EINEM EINZIGEN PROPELLER SIMULIERT

AVION À PROPULSION ÉLECTRIQUE DISTRIBUÉE SIMULANT UN AVION À HÉLICE UNIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.05.2020   IT 202000010369**

(43) Date of publication of application:
**15.03.2023   Bulletin 2023/11**

(73) Proprietor: **Politecnico di Milano**
**20133 Milano (IT)**

(72) Inventors:
• **PASQUALI, Davide**
**20133 MILANO (IT)**
• **SANTERAMO, Andrea**
**20133 MILANO (IT)**
• **ALBERTI, Lorenzo**
**20133 MILANO (IT)**
• **TOMBOLINI, Matteo**
**20133 MILANO (IT)**
• **TRAINELLI, Lorenzo**
**20133 MILANO (IT)**
• **RIBOLDI, Carlo Emanuele Dionigi**
**20133 MILANO (IT)**

(74) Representative: **Colombo, Stefano Paolo et al**
**Marchi & Partners S.r.l.**
**Via Vittor Pisani, 13**
**20124 Milano (IT)**

(56) References cited:
**EP-A1- 2 903 895      WO-A1-2019/006469**
**US-A1- 2002 133 322      US-A1- 2016 297 520**
**US-A1- 2020 085 988      US-A1- 2020 089 258**
**US-B1- 9 751 614**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to the aeronautical sector and in particular that of fixed-wing aircraft, equipped with electric motors, for example full-electric or hybrid-electric. More specifically, it concerns a distributed propulsion aircraft capable of simulating, for all practical purposes of flight management and thanks to specific hardware and software, different aircraft configurations, both single-engine and multi-engine.

## STATE OF ART

The context of General Aviation (GA) is, to date, substantially divided between single-engine (Single Engine, SE) aircraft and multi-engine (Multi Engine, ME) aircraft. A ME aircraft typically has higher performance and is, above all, safer due to the lower chance of losing all propulsive power. However, a multi-engine aircraft is generally more expensive to operate and maintain. Furthermore, it requires specific training to deal with emergency situations in which, due to the failure of one of the motors, an asymmetrical thrust condition is experimented.

For these reasons, most aircraft for both recreational and training use are in SE configuration. Conversely, SE aircraft are less safe than ME aircraft due to the presence of only one engine. In fact, a possible malfunction of the engine of SE aircraft is the cause of most of the accidents in this sector.

US20180305033 relates to a method of handling unbalanced thrusts caused by engine failure in an airplane equipped with a distributed propulsion system.

US20100305826 discloses a system for automatically managing engine control modes in a multi-engine aircraft.

EP2701976 A1 describes a maximum power limitation plan for the control of a propulsive asymmetry.

WO2019006469A1 discloses fault-tolerant electrical systems for aircraft.

WO2014053057A1 discloses electrically powered aerial vehicles and flight control methods.

US9751614B1 discloses aeroelastic wing shaping using distributed propulsion.

US2016297520A1 discloses modular nacelles to provide VTOL capabilities to fixed wing aerial vehicles.

US2002133322A1 relates to in-flight training of a pilot using a simulated engine failure of a multi-engine aircraft.

## SUMMARY OF THE INVENTION

The Applicant, in view of the aforementioned state of the art, has set itself the goal of providing an aircraft capable of reconciling the advantages of the two configurations, with the aim of increasing flight safety and allowing a new training method for the qualification of pilots both on single-engine and multi-engine aircraft, keeping the cost of operations low, exploiting the potential of electric or hybrid-electric propulsion.

According to a first aspect of the invention, there is provided a distributed electric propulsion fixed-wing aircraft, as defined in claim 1, comprising a plurality of electric propulsive units and a longitudinal plane,

> wherein the electric propulsive units are arranged symmetrically with respect to the longitudinal plane,
> wherein the electric propulsive units comprise first propulsive units at a first side of the longitudinal plane and second propulsive units at a second side of the longitudinal plane,
> wherein the distributed propulsion aircraft further comprises a control unit configured to provide a yaw moment so that a sideslip angle, $\beta$, is generated, so that the distributed electric propulsion aircraft flies as a fixed-wing aircraft equipped with a single propeller,
> wherein the control unit is configured to simulate the operating mode of a traditional thermal engine or a turbofan or turboprop engine by introducing a delay and/or an irregularity in the delivery of power and/or by decreasing power with the increase in altitude.

According to embodiments, the yawing moment is provided by causing a different power between at least one of the first propulsive units and a corresponding at least one of the second propulsive units.

According to embodiments, at least one of the first propulsive units comprises a first folding propeller and at least one of the second propulsive units comprises a second folding propeller, and wherein the yawing moment is provided by causing a different closing between the first folding propeller and the second folding propeller.

According to embodiments, at least one of the first propulsive units comprises a first variable-pitch propeller and at least one of the second propulsive units comprises a second variable-pitch propeller, and wherein the yaw moment is provided by causing a different pitch between the first variable-pitch propeller and the second variable-pitch propeller.

According to embodiments, in the event of a failure of a propulsive unit, or in the event of a collision with an external object, the control unit is configured to reduce the power of the first propulsive unit and/or to increase the power of the second propulsive unit to keep the sideslip angle, $\beta$, substantially equal to zero.

According to embodiments, the distributed electric propulsion fixed-wing aircraft further comprises a battery pack and, optionally, a power generation system for charging the battery pack.

According to embodiments, the distributed electric propulsion fixed-wing aircraft further comprises an inertial unit cooperating with said control unit.

According to embodiments, the distributed electric propulsion fixed-wing aircraft is configured to train a pilot on board thereof to fly with a fixed-wing aircraft equipped with a single propeller, such as in a single-engine airplane, while the pilot is flying with said distributed electric propulsion fixed-wing aircraft.

According to embodiments, the distributed electric propulsion fixed-wing aircraft further comprises two control units in a cooperating configuration, wherein a first control unit is connected to a first group of propulsive units and a second control unit is connected to a second group of propulsive units and wherein the first and second control units are connected together.

According to embodiments, the distributed electric propulsion fixed-wing aircraft further comprises two control units in a redundant configuration, wherein a first control unit is connected to all the propulsive units and the second control unit is connected to all propulsive units and wherein the first and second control units are connected together.

According to embodiments, the control unit is configured to exit from an accidental spin using a differential management of the propulsive units upon selection of a proper option (PANIC BUTTON) by a pilot on board.

According to embodiments, the control unit is configured to simulate a turn response of a single-engine aircraft by a differential power between at least one of said first propulsive units and at least one of said second propulsive units.

According to a second aspect, the present invention provides a method, as defined in claim 13, of operating a distributed electric propulsion fixed-wing aircraft so that the distributed propulsion aircraft flies as a single propulsive unit fixed-wing aircraft,

wherein the distributed electric propulsion aircraft comprises a plurality of electric propulsive units and a longitudinal plane,

wherein the electric propulsive units are arranged symmetrically with respect to the longitudinal plane,

wherein the electric propulsive units comprise first propulsive units at a first side of the longitudinal plane and second propulsive units at a second side of the longitudinal plane,

wherein the distributed electric propulsion aircraft further comprises a control unit,

wherein the method comprises providing a yawing moment so that a sideslip angle, $\beta$, is generated,

wherein the control unit is configured to simulate the operating mode of a traditional thermal engine or a turbofan or turboprop engine by introducing a delay and/or an irregularity in the delivery of power and/or by decreasing power with the increase in altitude.

In embodiments, the yawing moment is provided by causing a different power between at least one of the first propulsive units and a corresponding at least one of the second propulsive units.

In embodiments, at least one of the first propulsive units comprises a first folding propeller and at least one of the second propulsive units comprises a second folding propeller, and wherein the yawing moment is provided by causing a different closing between the first folding propeller and the second folding propeller.

In embodiments, at least one of the first propulsive units comprises a first variable-pitch propeller and at least one of the second propulsive units comprises a second variable-pitch propeller, and wherein the yawing moment is provided by causing a different pitch between the first variable-pitch propeller and the second variable-pitch propeller.

In the event of a failure of a propulsive unit, or in the event of a collision with an external object, the power of the first propulsive unit could be reduced and/or the power of the second propulsive unit is increased to keep the sideslip angle, $\beta$, substantially equal to zero.

In embodiments, the distributed electric propulsion fixed-wing aircraft is operated to train a pilot on board thereof to fly with a fixed-wing aircraft equipped with a single propeller, such as in a single-engine airplane, while the pilot is flying with said distributed electric propulsion fixed-wing aircraft.

In embodiments, the control unit is configured to:

exit from an accidental spin using a differential management of the propulsive units upon selection of a proper option by a pilot on board; and/or

simulate a turn response of a single-engine aircraft by a differential power between at least one of said first propulsive units and at least one of said second propulsive units.

## BRIEF DESCRIPTION OF THE DRAWINGS

The present invention will become clearer from the following detailed description, given by way of non-limiting example, to be read with reference to the attached Figures, in which:

- Fig. 1 schematically shows a propulsive configuration according to a first embodiment;
- Fig. 2 schematically shows a propulsive configuration according to a second embodiment;
- Fig. 3 schematically shows a propulsive configuration according to a third embodiment;
- Fig. 4 schematically shows a propulsive architecture of the serial Hybrid-Electric aircraft;
- Fig. 5 shows an example of logic and power connections of an EPMS control unit;
  Fig. 6a shows a cooperating configuration of two EPMS control units;
- Fig. 6b shows a redundant configuration of two EPMS control units;
- Fig. 7 shows a block diagram of the control logic in single-motor mode in the case of normal operations;
- Fig. 8 shows a block diagram of the control logic in single-motor mode in case of emergency conditions;
- Fig. 9 shows a block diagram of the control logic in multi-motor mode in the case of normal operations; is
- Fig. 10 shows a block diagram of the control logic in multi-motor mode in case of emergency conditions.
- Fig. 11 shows a block diagram of a possible control logic realization for sideslip angle imposition.

## DETAILED DESCRIPTION

As stated above, the present invention relates to an aircraft which reconciles the advantages of the single-engine configuration with those of the multi-engine configuration, increasing flight safety and keeping the cost of operations low.

In particular, the present invention relates a control logic specifically designed to perform an in-flight simulation of the behavior of a single-engine aircraft on board, and in flight, of a multi-engine aircraft. This in-flight simulation is carried out with the imposition of a specific setpoint for each individual propulsive unit. This simulation can be summarized with the generation of a sideslip angle $\beta$ by setting a yawing moment, resulting in a variation both of the turn rate time derivative of the azimuth angle and of the bank angle $\varphi$. With the aforementioned control system, a qualitative behavior is reached, and not a specific quantitative reference. Specifically, the behavior of a single-engine is replicated: each singular motor replicates the same dynamics, with generated angles and rates qualitatively similar but not quantitatively identical. In emergency conditions, the system helps the pilot by requiring the still operating engines to minimize flight asymmetry and maximize available power. Thanks to this system it is possible to think about an aircraft falling into both single-engine and multi-engine flight categories, and therefore flyable by pilots with both ratings (or licenses).

For the purpose of the present description and the appended claims, the following definitions are given:

- Motor or Electric Motor: it is a device that converts electrical energy into mechanical energy. Referring to the following, electrical energy is used to rotate a propeller or a ducted fan to produce thrust.
- Propulsive unit: a system meant to produce thrust. In particular, it is intended as comprising (or substantially made of) at least one electric motor, an electronic speed controller (for instance an inverter) and at least one propeller or ducted fan driven by said motor. The propeller or ducted fan typically has a substantially horizontal axis, namely an axis which is horizontal or which deviates from the horizontal by 1 to 5 degrees.
- Distributed electric propulsion: a propulsion system which comprises three or more propulsive units.
- Single-engine SE: an aircraft with a single engine. Also referred to the regulatory framework for single-engine aircraft.
- Multi-engine ME: an aircraft with at least two engines. Also referred to the regulatory framework for multi-engine aircraft.

The aircraft according to the present invention is a fixed-wing aircraft with a plurality of propulsive units. According to embodiments, the propulsive units are an even number greater than two. Preferably, the propulsive units are arranged in a symmetrical configuration with respect to the longitudinal plane of symmetry of the aircraft.

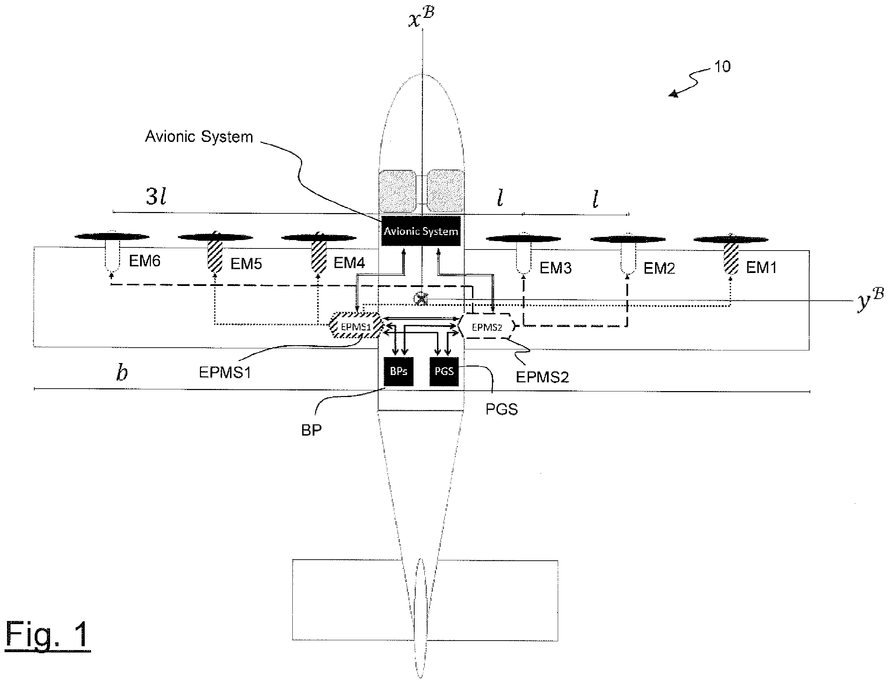

Figure 1 shows, by way of example, an aircraft 10 with a propulsive configuration according to a first embodiment. This configuration, which will be described in greater detail below, includes six EM1-EM6 propulsive units mounted on the wing (three for each wing), symmetrically with respect to the longitudinal plane of the aircraft 10. This configuration has been developed and experimented with a scale radio-controlled aircraft. Such aircraft exploits the six electric motors and a control unit specifically conceived for their management. It has been employed in a flight test campaign which validates the whole concept, meeting the expected behavior.

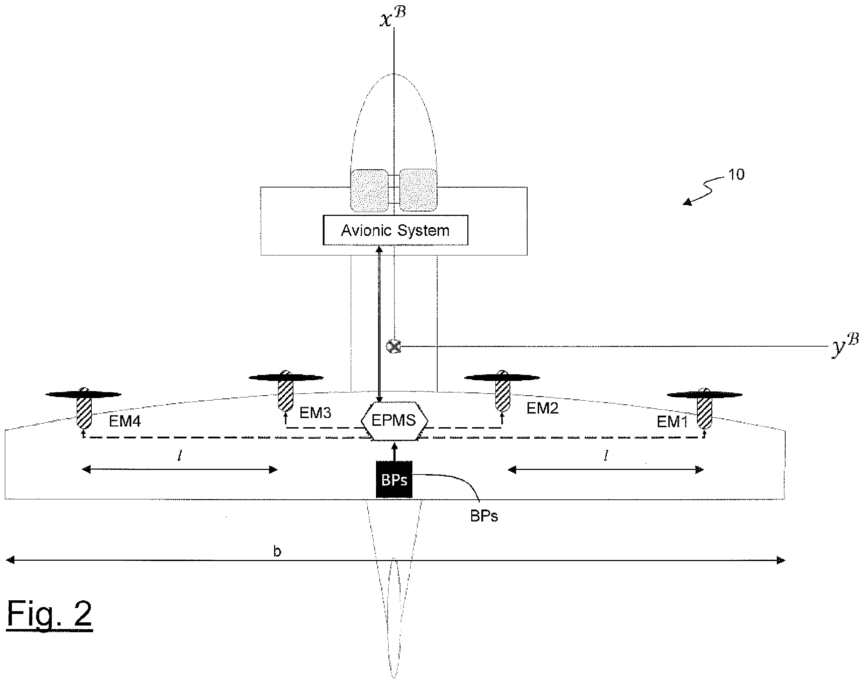

Figure 2 shows, again by way of example, an aircraft 10 with a propulsive configuration according to a second embodiment. This configuration includes four EM1-EM4 propulsive units mounted, symmetrically with respect to the longitudinal plane of the aircraft 10, on the rear wing of the aircraft equipped with front stabilizers.

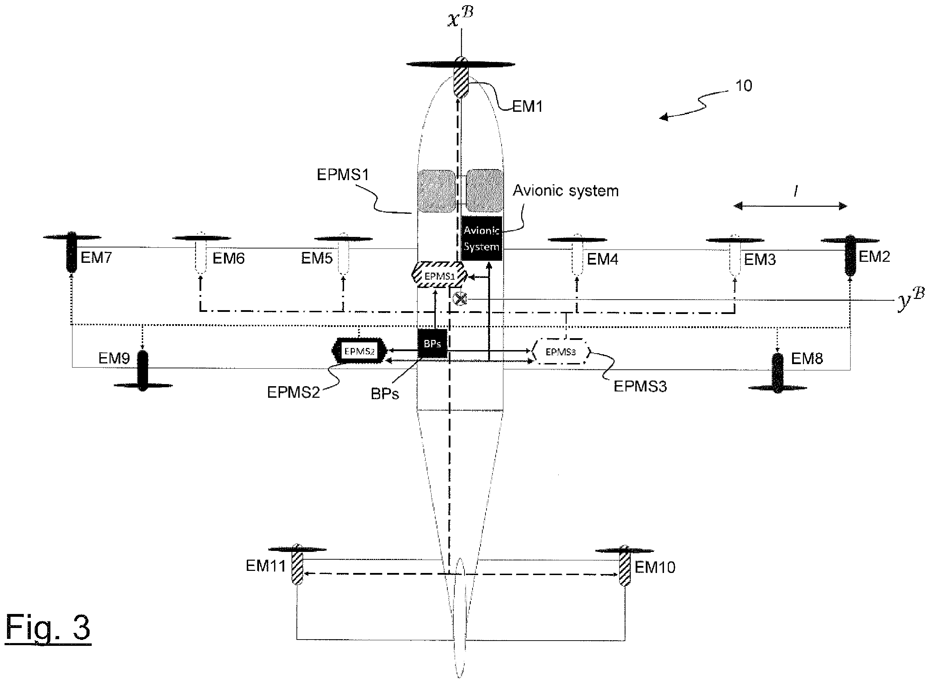

Figure 3 shows, again by way of example, an aircraft 10 with a propulsive configuration according to a third embodiment. This configuration includes eleven propulsive units, one of which is central (EM1), two on the rear stabilizers and eight on the wing (more precisely, for each wing, three with pulling propellers on the leading edge and one with pushing propellers on the trailing edge).

Advantageously, according to an embodiment, the aircraft 10 according to the present invention has a full-electric propulsion, with one or more batteries (BP battery pack) that power the propulsive units.

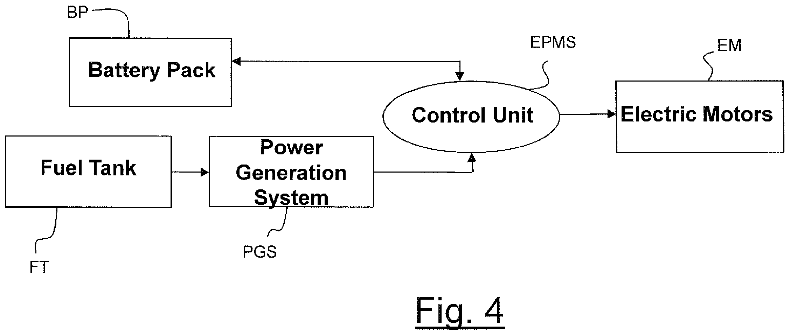

According to another embodiment, the aircraft 10 has a hybrid-electric propulsion. Figure 4 schematically shows the serial hybrid-electric logic. Figure 4 shows a battery pack BP (in turn comprising one or more batteries) to power the propulsive units and a power generation system PGS with fuel tank to charge the battery pack BP. Figure 4 also shows a control unit EPMS. By way of example, the PGS system comprises a thermal engine and an electric generator or fuel cells.

Thanks to the architecture with multiple propulsive units, according to the invention a distributed propulsion aircraft 10 is provided that can simulate, thanks to specifically designed hardware and software, the single-engine SE and multi-engine ME modes. According to the invention, it is therefore possible to train a pilot on board for obtaining (or maintaining) the license to fly both multi-engine aircraft and single-engine aircraft, using an aircraft which is operationally a multi-engine ME, and therefore safer.

However, according to the invention, it is guaranteed that a pilot or a trainee pilot who is qualified for a single-engine never finds himself, in any situation, flying with a highly asymmetrical thrust configuration typical of a multi-engine in the event that one or more propulsive units are not operative for any reason. The present invention is based on a logical architecture of hardware and software suitable for carrying out said simulation during flight, and is independent from the number of propulsive units, power generation units PGS, number of EPMS control units that carry out the simulation and from how these are structured and connected. It is also independent of the general configuration of the aircraft. Furthermore, a generic electric aircraft should be in any case equipped with a control unit for managing the propulsive unit(s), but such a control unit is dissimilar to the EPMS unit and from what stated before, as this is not specifically designed for simulating the behavior of another kind of aircraft. The generic electric aircraft could even have a similar hardware configuration, but the difference is in the control logic and software.

The propulsive units are managed by a control unit EPMS that allows the pilot to safely fly the aircraft in the desired operating mode. In principle, a configuration with two propulsive units is sufficient for normal flight, but not in an emergency situation. In fact, in the event of a propulsion unit failure, for example in the event of a collision with a bird, the aircraft 10 would be irremediably conditioned to fly in a skid manner. Conversely, increasing the number of propulsion units EM increases the complexity of the system, but also increases overall safety.

As is known, an electric motor, if well cooled, is capable of sustaining a maximum non-continuous power much higher (even 150%) than the nominal one for a few minutes. According to preferred embodiments of the present invention, this property is exploited in an emergency. For example, on an aircraft with four propulsive units in which one is out of order, the remaining three will have to provide 133% of power to have the equivalent total power of the aircraft without malfunctions.

According to another embodiments, electric motor non-continuous power could be simulated de-rating them of a certain value, in order to obtain the pursued margin.

According to embodiments, the management of the propulsive units is entirely entrusted to a single control unit. However, such a configuration is intrinsically unsafe since, in the event of a single control unit malfunction, there is a total loss of power.

According to preferred embodiments, at least two redundant or cooperating control units are provided which will take charge of all the propulsive units or of a part of them. These control units, called Energy and Propulsion Management System (EPMS), are responsible for the total management of the battery pack BP, the PGS (Power Generation System), and each EM electric motor individually. The EPMS control units are preferably configured to manage the discharge and charge of the BP batteries and the mode of use of the PGS system, if present.

Preferably, the EPMS control units are configured to communicate with each other and with the on board Avionics Suite both as regards the inputs from the pilot, and for notifications to the pilot and control of the actuators by the autopilot.

Preferably, each control unit EPMS is responsible for a certain number of propulsive electric motors, which are in any case arranged so that, in the event of failure or malfunction of one of the two control units EPMS, the yawing moment at the center of mass G generated by them is zero (Equation 1).

$$\mathcal{N}_G^{EM} = 0 \qquad\qquad\qquad (1)$$

According to embodiments, the EPMS control units incorporate an inertial platform (IMU, Inertial Measurement Unit) equipped for example with MEMS (Micro Electro-Mechanical Systems), essential to keep the sideslip angle $\beta$ at zero when necessary. The information on the sideslip angle could possibly also come from the avionics suite on board, using the inertial platform or the turn rate indicator.

The EPMS control unit could work with an open-loop or closed-loop control feedback, therefore with a completely analytic motor mapping, as in the scaled demonstrator.

According to embodiments, the propellers are foldable. According to other embodiments, the propellers have variable pitch, so as to be able to minimize the resistance generated in the event of failure of a propulsive unit. The control units EPMS are configured to identify a possible failure or malfunction and manage it correctly. Examples of faults or malfunctions can be, for example, one or more of:

> lost communication with the Avionics Suite;
> lost communication or failure of the other control unit EPMS;
> internal problem due to hardware or software;
> one or more electric motors blocked or malfunctioning, or a damaged propeller, or interrupted electrical connection, comparing the current and rotation speed of the motors;
> at least partially malfunctioning batteries; and
> broken or malfunctioning PGS system.

According to the present invention, the EPMS control units are configured to detect a failure, apply the appropriate corrective actions and communicate them to the pilot.

According to embodiments, the EPMS units include a Health and Usage Monitoring System (HUMS) for the BP battery pack, the PGS system, the propulsive units EM and the electronic systems, which records the parameters with anomalous values for maintenance purposes.

The aircraft 10 according to the present invention has an increased safety level since the possibility of a total loss of power is very low if compared to that of a traditional aircraft, especially if single-engine SE. Total loss of power in an aircraft according to the present invention can only occur in the event of multiple failures.

Preferably, according to the present invention it is possible to select both the single-engine SE flight mode and the multi-engine ME flight mode. According to embodiments, the pilot has available on the on board display (MFD, Multi-Function Display) the possibility of selecting the SE or ME mode only on the ground before starting taxiing. To avoid misinterpretations, the on board display preferably presents a clear reading of the selected flight mode and, based on this, presents information specially designed to adequately represent the type of aircraft whose simulation is selected.

According to embodiments, the aircraft 10 of the present invention has the ability to choose the best energy management strategy depending on the mission to be flown.

The aircraft of the invention preferably has two thrust levers, one for each propulsive side, normally locked together. Their position is not directly linked to the revolutions of the electric motors, but to the power required by the driver as a percentage of the total, also providing a segment for the non-continuous power request. Finally, the system can provide a "Panic Button" that will allow the software to automatically manage the exit from an accidental spin using the differential management of the propulsive units.

The various operating modes are described in greater detail below.

SE single-engine mode

As is known, the main piloting difference between an SE aircraft and a ME aircraft is that, in a generic flight condition, an SE aircraft does not achieve a symmetrical balance of forces, due to the yawing moment induced by the rotation of the propeller, which generates a non-zero sideslip angle $\beta$. To correct this tendency, the fuselage or tail of a single-engine aircraft are designed to maintain this angle at zero in the nominal cruising condition, but in other conditions, such as those of application of climb or descent power, this implies that the aircraft flies slightly asymmetric, and the pilot must intervene with an action on the rudder to correct this tendency.

According to the present invention, this characteristic can be simulated by the EPMS control units, for example by acting in a differential manner on the outermost engines (i.e. furthest from the longitudinal plane of the aircraft) to obtain a non-null yawing moment when climb power (or a generic high-power setting) is required, through a non-symmetrical thrust distribution. For example, if the pilot asks for 100% power, an external motor is required less than 100% power (for example 95%) while the others will operate at 100% power. In descent, the EPMS control units will ensure that only some propellers do close (or pitch-feather), leaving one or more open in order to generate a non-symmetrical drag distribution.

These motor management parameters are determined via flight tests for each specific condition and remain constant once determined.

A further desirable feature of the system is that of simulating the turn response of a single-engine aircraft: propeller effects induce a different right or left turning behavior. This could be reproduced with a differential power distribution on the right or left side.

In addition, the operating mode of a traditional thermal engine can be simulated, for instance an internal combustion reciprocating engine, or a turbofan or turboprop engine, by introducing delays, irregularities and other features in the delivery of power via software and the decrease of power with the increase in altitude (which does not happen with an electric motor). This latter feature is independent from the selected SE or ME mode, and can be exploited in both. The two thrust levers are locked together all the time and in the event of an inadvertent differential setting the system will consider the greatest of the two.

In the event of a failure, the aircraft of the present invention is configured in such a way as to prevent a Pilot in Command (PIC) or a student (SPIC) with SE qualification from being able to enter a non-symmetrical thrust condition. Consequently, the following scenarios are taken into account:

- electric motor or propeller failure, collision with an external object: for all these situations, the result is similar, i.e. a reduction in thrust on one side of the aircraft. The EPMS control unit will manage this situation, distributing in a different way the power supplied to the single electric motors to keep $\beta$ equal to zero. In the event that this is not sufficient (motors at critical temperature or maximum power available, or in the event of failure of all motors on one side), the EPMS will control the vertical rudder and autopilot aileron actuators, to achieve symmetric flight;
- failure of control unit EPMS: this will have consequences on the maximum available power, as only part of the propulsion system will be available, but the flight will still be symmetrical thanks to the arrangement of the remaining motors;
- Hardware or Software problem of the EPMS control unit: in the event that the system management logic presents malfunctions, or the communication between the various components is lost, a degraded operating logic will start. This will assign a power value equal to all the motors and directly proportional to the position of the thrust levers, ensuring symmetrical flight.

- minor structural damage: in the event of minor or superficial damage, asymmetrical aerodynamic drag could be generated; this situation would be handled by the system as in the case of engine failure.
- for a generic, non-recognized failure, the system could automatically enter in the emergency working mode starting from the reading of the sideslip angle.

For each different condition, visual and / or acoustic alarms will warn the pilot, notifying the necessity to land as soon as possible and enhancing situational awareness.

## Multi-engine ME mode

The ME configuration is simpler, as there is no need to simulate unwanted propulsive effects. According to embodiments, the thrust levers can be unlocked and used independently from each other for training or other purposes: the pilot has complete authority over the dynamics of the aircraft.

An ME qualified pilot must be able to handle an asymmetrical thrust situation caused by an engine failure. However, in emergency situations, the ability to reduce a pilot's workload always has a positive impact. Consequently, according to the present invention, the same emergency strategy is adopted as in SE mode, unless the pilot decides to bypass it.

## Optional jet engine simulation mode

An optional operating mode for both SE and ME configurations is to simulate the behavior of a jet engine using the EPMS control unit software. This implies in the first place a delay in the delivery of power as occurs in jet engines (spool-up time), forcing the student to make approaches at high rotational speeds, showing parameters of the dummy engines, appropriately defined, on the PFD (Primary Flight Display) and allowing to simulate the airbrakes with the differential (but symmetrical) use of some engines, up to the limit of reversing the direction of rotation, and the thrust reversers once on the ground.

## Optional mode of increasing comfort

For both SE and ME modes there is a comfort increase mode. This requires the control units to use the motors in a differential way for the suppression of unwanted dynamics (such as the Dutch Roll), the automatic coordination of the turn and the management of the system to be as silent and free of vibrations as possible.

## Training mode

In training, the flight instructor sits next to the student on many flights. Thanks to the present invention, it will be able to inject faults and malfunctions through the MFD (Multi Function Display) within the avionics and propulsion systems to better train students to take the best action.

<u>EPMS control unit description</u>

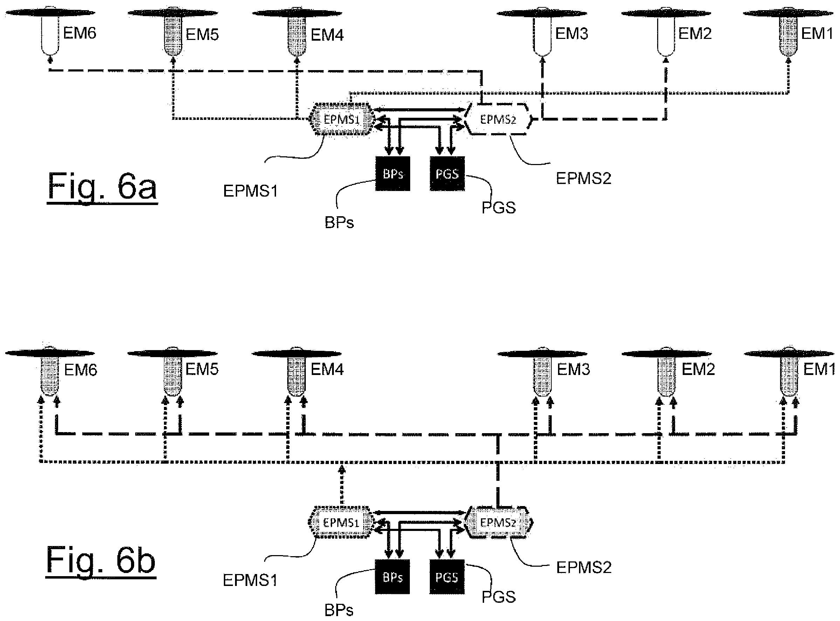

Figures 6a and 6b show the operating diagrams of two control units EPMS1 and EPMS2 in a cooperating and redundant configuration, respectively in the case, merely by way of example, of an aircraft with six propulsive units EM1-EM6.

As shown in Figure 6a, the first control unit EPMS1 is connected to the outermost propulsive unit EM1 of the right half-wing as well as to the central propulsive unit EM5 and the internal propulsive unit EM4 of the left half-wing. On the other hand, the second control unit EPMS2 is connected to the external propulsive unit EM6 of the left half-wing as well as to the central propulsive unit EM2 and the internal propulsive unit EM3 of the right half-wing. The propulsive units may lie at an equal distance from each other or not, according to design optimization. The internal propulsion units EM3, EM4 (i.e. closer to the fuselage) are at a distance $l$ from the longitudinal plane of the aircraft 10. Each control unit EPMS is connected to the other control unit, as well as to the battery pack BP and the PGS system.

In the redundant configuration of Figure 6b, each control unit EPMS1 EPMS2 is connected to all the motors EM1-EM6. In addition, each control unit is connected to the other control unit, as well as to the battery pack BP and the PGS system.

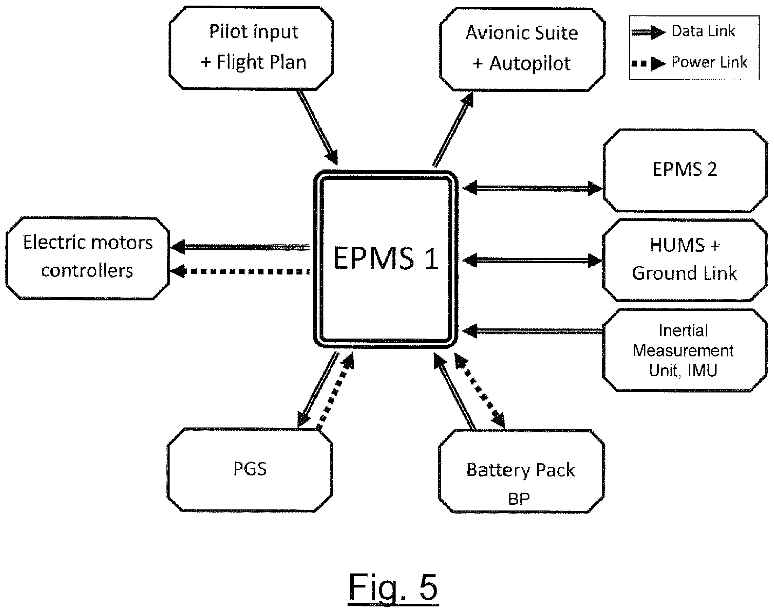

The control units can interface with each other and with the propulsive units EM according to one of the two aforesaid configurations or in other ways, depending on the choice made by the aircraft manufacturer and on other imposed parameters. A schematic example of how the single control unit EPMS1 is connected to the other systems is in Figure 5. The same applies to the second control unit EPMS2.

The control unit EPMS1 is preferably connected with the other control unit EPMS2, with the inertial unit IMU, with the battery pack BP, with the PGS system (if present), with the controllers of the electric motors, with the pilot interface and the avionics suite. Advantageously, it can be connected with HUMS health and use monitoring systems and eventually other systems.

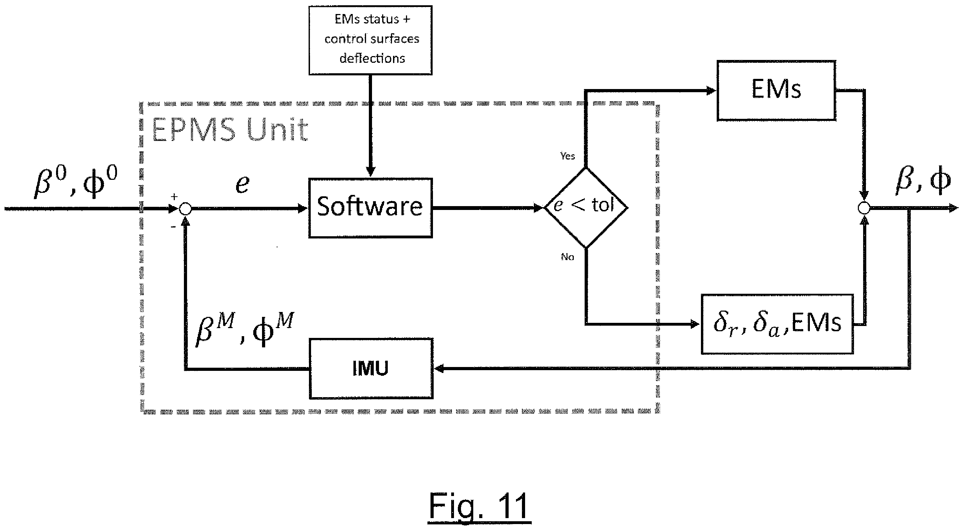

Figure 11 shows, by way of example, a possible logic feedback scheme for the operation of the generic control unit EPMS. Given a reference input $(\beta^0; \varphi^0)$ (with $\varphi$ indicating the bank angle) dependent on the operating mode in use and on the specific flight situation, this is compared and fed back with the measured values of the sideslip angle and bank angle $(\beta^M; \varphi^M)$ coming from the inertial measurement unit IMU. With input data and operating parameters, the control unit software will act to cancel the error between reference angles and measured angles, depending on whether this is contained within a certain tolerance range or not. This range of values, called "tol" in Figure 11, will be a function of the aerodynamic, inertial and propulsive parameters of the aircraft, as well as the current state of health of the electric motors. The instantaneous state of health of electric motors can be obtained, for example, through the temperature value of the single motor and the electric current required by each, which can be compared with tabulated values, functions of number of revolutions and applied voltage. In the event that the absorbed current differs greatly from the nominal one, this could be an indication that the motor or the propeller has suffered a failure: for example, with a damaged propeller the electric current values would be much lower than the nominal ones, while with a blocked motor these would be much higher. Two scenarios are therefore possible:

- in the event that the error is within the instant tolerance tol, the EPMS control unit acts only on the drive of the individual motors, managing them in order to cancel the error;
- if on the contrary the error exceeds the tolerance tol, it is necessary that the control unit imposes not only an action on the motors, but also a deflection of the aerodynamic control surfaces. This is represented by $\delta_R$ and $\delta_A$.

The adjustment of the individual engines, as well as that of the control surfaces, will in any case be the result of an interaction between the control imposed by the pilot and the programming of the control unit. The latter must therefore know the instantaneous position of the control surfaces to avoid interference or any unwanted phenomena. The preferential logic provides that, as for many autopilots, for a limited action by the pilot on the controls, this latter effect is added algebraically with the action imposed on them by the EPMS, while for a drive that involves high deflection angles the pilot is in control. The control unit included in the EPMS can be a controller designed with PID, LQR or other feedback technique.

In another embodiment, the EPMSs could also work in open-loop configuration, therefore following a full-analytic throttle-setpoint mapping. In this working modality, some coefficients (gains) manage the ratio between the pilot throttle setting and the electric motors setpoints. Such gains could vary depending on many parameters, also following normal and emergency working conditions. These gains could be or could be not independent from airspeed, thrust and many other parameters.

<u>Application Examples</u>

The present invention is adaptable to different types of aircraft, in different configurations. Figures 1-3 show three of the large amounts of possible combinations.

Figure 1 shows an aircraft in a conventional configuration with a serial Hybrid-electric propulsion architecture. It has a total of six electric motors in pulling configuration, uniformly positioned on the wing, three for each wing, two collaborating control units EPMS1 and EPMS2, a battery pack BP and a power generation system PGS for charging the battery pack BP. As shown schematically in Figure 1, it is clear that, in the event that one of the two control units fails, symmetrical flight and half of the rated continuous power are still guaranteed. In particular, the yawing moment with respect to the center of gravity remains zero, due to the imposition of the conditions:

$$\mathcal{N}_G^{EM_1} = \mathcal{N}_G^{EM_4} + \mathcal{N}_G^{EM_5}$$

$$\mathcal{N}_G^{EM_2} + \mathcal{N}_G^{EM_3} = \mathcal{N}_G^{EM_6}$$

With three non-operational engines, the aircraft has at its disposal 50% of the nominal power or 75% if exploiting non-continuous power.

Figure 2 shows an electric "Canard" configuration, with four motors positioned on the wing, a single control unit EPMS and a battery pack. Although not recommended, the configuration with a single unit EPMS is still able to guarantee every characteristic described above. The obvious disadvantage is the total loss of power in the event of a failure of the control unit involved, given the absence of a second one; however, this configuration could be exploited, for example, on small aircraft.

Figure 3 shows a third possible configuration: an electric aircraft with a total of three collaborating control units EPMS and eleven propulsive units. Also in this case, following the failure of one or even two control units EPMS, a yawing moment equal to zero is guaranteed thanks to the arrangement of the propulsive units and their connections to the control units. In case of failure of one or more units, the symmetrical flight will be guaranteed as already described. Particularly of note in this configuration is the odd number of propulsive units: in fact, one (EM1) is located in the nose of the aircraft and has a different size than the others. In this case, in SE flight configuration, the sideslip angle $\beta$ will be physically generated by the presence of the odd unit, while in ME mode the symmetry will be guaranteed by correcting this tendency with one of the external engines, as opposed to what is done in a configuration with an even number of motors.

Below is presented, by way of example, an operating logic of the control unit EPMS. Calculations and references were made as an example for the aircraft presented in Figure 1, but can be extended to any configuration. Table 1 presents a summary of the main characteristics of the aircraft in question.

Table 1

| | |
|---|---|
| Wingspan | b = 10,5 m |
| Wing surface | S = 15,8 m$^2$ |
| Maximum take-off mass | MTOM: 1069 kg |
| Number of propulsive units | 6 |
| Manufacturer and model of the electric motor | MGM Compro REX-30 |
| Continuous power single electric motor | 15 kW |
| Static traction single electric motor | $F_x \approx 280$ N |
| Motor positioning from the longitudinal plane | $y_1$ = 1.25 m<br>$y_2$ = 2.50 m<br>$y_3$ = 3.75 m |

By solving the equations of the aircraft equilibrium in horizontal steady flight for the aircraft, for example, it is possible to determine the characteristic values of the flight angles and the differential powers to be assigned to ensure that the simulation of the SE aircraft is effective. Table 2 shows some characteristic operating points.

Table 2

| VCAS flight speed | 52 m/s | 52 m/s | 35 m/s | 65 m/s |
|---|---|---|---|---|
| Throttle unbalance | 10% | 25% | 10% | 10% |
| Angle of incidence $\alpha$ | 4.38 deg | 4.38 deg | 11.55 deg | 2.25 deg |
| Sideslip angle $\beta$ | 0.74 deg | 1.86 deg | 1.83 deg | 0.42 deg |
| Rudder deflection $\delta R$ | -0.98 deg | -2.46 deg | -2.42 deg | -0.56 deg |
| Aileron deflection $\delta A$ | -0.06 deg | -0.17 deg | -0.16 deg | -0.04 deg |

The values are a function of the flight speed, therefore also of the force exerted by the single propeller, and of the stability and control derivatives of the aircraft. The unbalance for the creation of the yawing moment can be implemented both by acting on a single motor (for example 10% less power on motor EM1), and on two (-5% on motor 1, + 5% on motor EM6). The last mode allows to preserve the total available power unchanged.

As is evident from the previous results, the sideslip angle induced with the SE aircraft simulation strongly depends on the flight speed: in fact, maintaining an unbalance of 10%, at low speed the sideslip angle is greater than at high speed. This behavior perfectly reflects that of a real single-engine aircraft. Furthermore, it is possible to note how the induced bank angle (and therefore the consequent necessary deflection of the ailerons) is an order of magnitude lower than the variation of azimuth angle, also in this case reflecting the dynamics of a real aircraft. Finally, the longitudinal dynamic of the aircraft is unaltered, as long as the power supplied is constant.

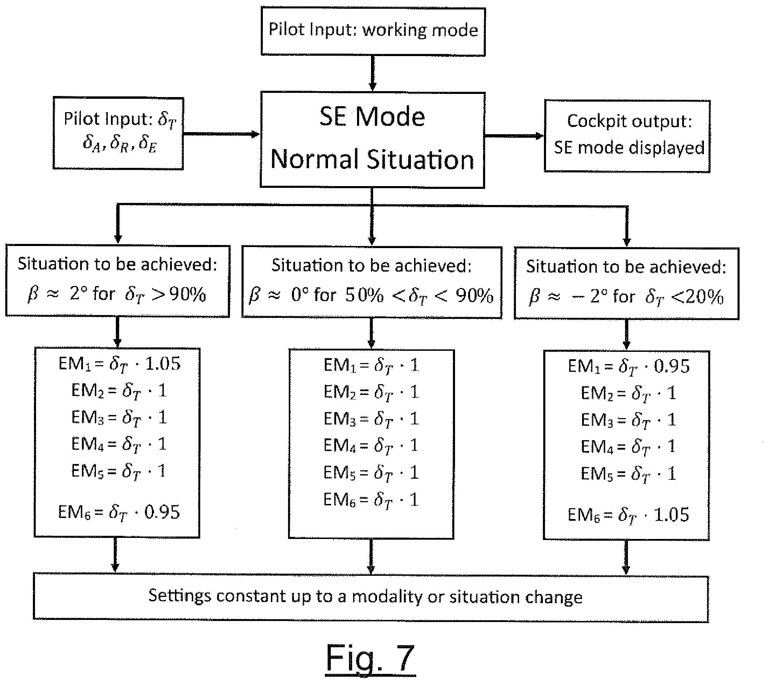

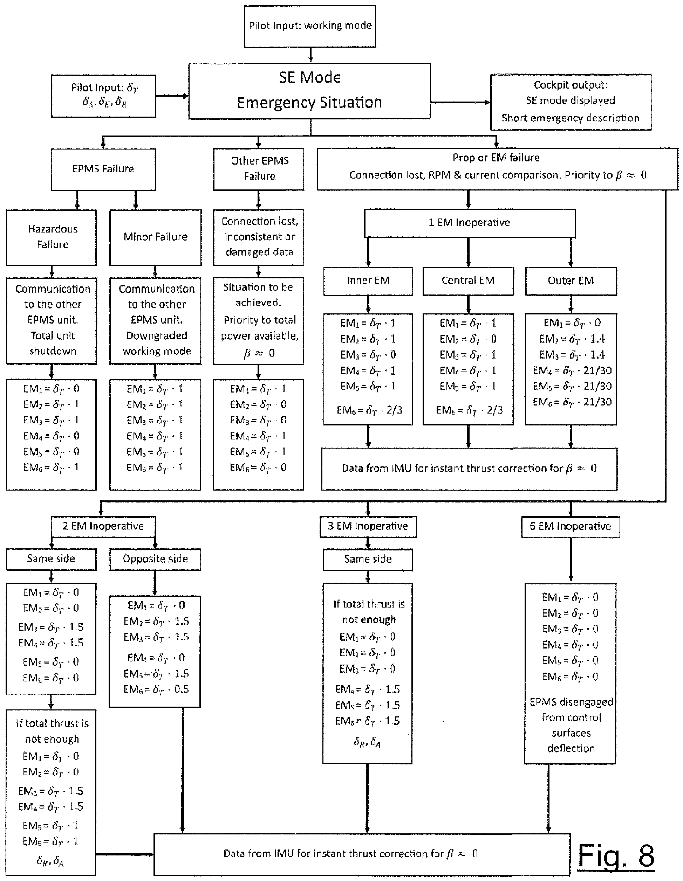

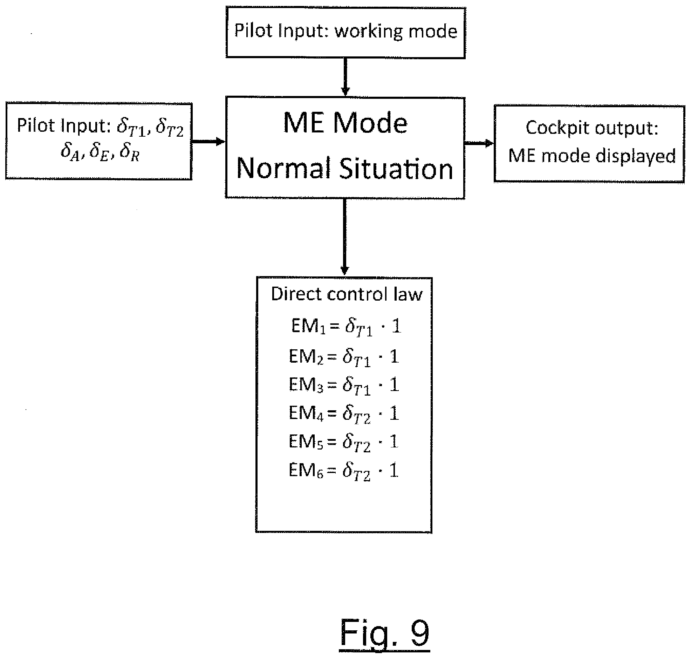

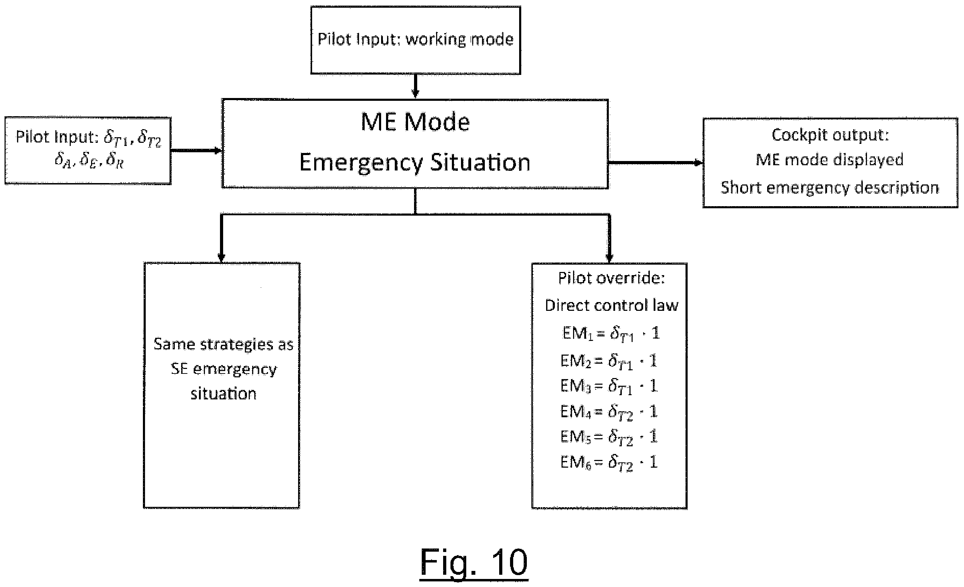

Figure 7 shows the block diagram of the control logic in Single Engine mode in the case of normal operations, while in Figure 8 the same is referred to emergency conditions. Similarly, Figures 9 and 10 show the strategies for the aircraft in Multi Engine configuration in case of normal operation or emergency. Of course, the one illustrated in the Figures is only an example of a plurality of alternatives.

The symbol $\delta_T$ refers to the throttle setting when the two control levers are joined, while $\delta_{T1}$ and $\delta_{T2}$ refer to the setting of the left and right thrust levers.

## Claims

1. A distributed electric propulsion fixed-wing aircraft (10) comprising a plurality of electric propulsive units (EM1-EM6; EM1-EM4; EM1-EM11) and a longitudinal plane,

   wherein the electric propulsive units (EM1-EM6; EM1-EM4; EM1-EM11) are arranged symmetrically with respect to the longitudinal plane,
   wherein the electric propulsive units (EM1-EM6; EM1-EM4) comprise first propulsive units at a first side of the longitudinal plane and second propulsive units at a second side of the longitudinal plane,
   wherein the distributed propulsion aircraft (10) further comprises a control unit (EPMS) configured to provide a yawing moment so that a sideslip angle, $\beta$, is generated, so that the distributed electric propulsion aircraft (10) flies as a fixed-wing aircraft equipped with a single propeller,
   wherein the control unit (EPMS) is configured to simulate the operating mode of a traditional thermal engine or a turbofan or turboprop engine by introducing a delay and/or an irregularity in the delivery of power and/or by decreasing power with the increase in altitude.

2. The distributed electric propulsion fixed-wing aircraft (10) of claim 1, wherein the yawing moment is provided by causing a different power between at least one of the first propulsive units and a corresponding at least one of the second propulsive units.

3. The distributed electric propulsion fixed-wing aircraft (10) of claim 1 or 2, wherein at least one of the first propulsive units comprises a first folding propeller and at least one of the second propulsive units comprises a second folding propeller, and wherein the yawing moment is provided by causing a different closing between the first folding propeller and the second folding propeller.

4. The distributed electric propulsion fixed-wing aircraft (10) of claim 1, 2 or 3, wherein at least one of the first propulsive units comprises a first variable-pitch propeller and at least one of the second propulsive units comprises a second variable-pitch propeller, and wherein the yawing moment is provided by causing a different pitch between the first variable-pitch propeller and the second variable-pitch propeller.

5. The distributed electric propulsion fixed-wing aircraft (10) of any of the preceding claims, wherein in the event of a failure of a propulsive unit, or in the event of a collision with an external object, the control unit (EPMS) is configured to reduce the power of the first propulsive unit and/or to increase the power of the second propulsive unit to keep the sideslip angle, β, substantially equal to zero.

6. The distributed electric propulsion fixed-wing aircraft (10) of any of the preceding claims, further comprising a battery pack (BP) and, optionally, a power generation system (PGS) for charging the battery pack.

7. The distributed electric propulsion fixed-wing aircraft (10) of any of the preceding claims, further comprising an inertial measurement unit (IMU) cooperating with said control unit (EPMS).

8. The distributed electric propulsion fixed-wing aircraft (10) of any of the preceding claims, configured to train a pilot on board thereof to fly with a fixed-wing aircraft equipped with a single propeller, such as in a single-engine airplane, while the pilot is flying with said distributed electric propulsion fixed-wing aircraft (10).

9. The distributed electric propulsion fixed-wing aircraft (10) of any of the preceding claims, comprising two control units (EPMS1, EPMS2) in a cooperating configuration, wherein a first control unit (EPMS1) is connected to a first group of propulsive units (EM1, EM4, EM5) and a second control unit (EPMS2) is connected to a second group of propulsive units (EM2, EM3, EM6) and wherein the first and second control units (EPMS1, EPMS2) are connected together.

10. The distributed electric propulsion fixed-wing aircraft (10) of any one of claims 1-8, comprising two control units (EPMS1, EPMS2) in a redundant configuration, wherein a first control unit (EPMS1) is connected to all the propulsive units (EM1-EM6) and the second control unit (EPMS2) is connected to all propulsive units (EM1-EM6) and wherein the first and second control units (EPMS1, EPMS2) are connected together.

11. The distributed electric propulsion fixed-wing aircraft (10) of any one of preceding claims, wherein the control unit (EPMS) is configured to exit from an accidental spin using a differential management of the propulsive units upon selection of a proper option by a pilot on board.

12. The distributed electric propulsion fixed-wing aircraft (10) of any one of preceding claims, wherein the control unit (EPMS) is configured to simulate a turn response of a single-engine aircraft by a differential power between at least one of said first propulsive units and at least one of said second propulsive units.

13. A method of operating a distributed electric propulsion fixed-wing aircraft (10) so that the distributed propulsion aircraft (10) flies as a single propulsive unit fixed-wing aircraft,

 wherein the distributed electric propulsion aircraft (10) comprises a plurality of electric propulsive units (EM1-EM6; EM1-EM4; EM1-EM11) and a longitudinal plane,
 wherein the electric propulsive units (EM1-EM6; EM1-EM4; EM1-EM11) are arranged symmetrically with respect to the longitudinal plane,
 wherein the electric propulsive units (EM1-EM6; EM1-EM4) comprises first propulsive units at a first side of the longitudinal plane and second propulsive units at a second side of the longitudinal plane,
 wherein the distributed electric propulsion aircraft (10) further comprises a control unit (EPMS),
 wherein the method comprises providing a yawing moment so that a sideslip angle, β, is generated
 wherein the control unit (EPMS) is configured to simulate the operating mode of a traditional thermal engine or a turbofan or turboprop engine by introducing a delay and/or an irregularity in the delivery of power and/or by decreasing power with the increase in altitude.

14. The method of claim 13, wherein the yawing moment is provided by causing a different power between at least one of the first propulsive units and a corresponding at least one of the second propulsive units.

15. The method of claim 13 or 14, wherein at least one of the first propulsive units comprises a first folding propeller and at least one of the second propulsive units comprises a second folding propeller, and wherein the yawing moment is provided by causing a different closing between the first folding propeller and the second folding propeller.

16. The method of claim 13, 14 or 15, wherein at least one of the first propulsive units comprises a first variable-pitch propeller and at least one of the second propulsive units comprises a second variable-pitch propeller, and wherein the yawing moment is provided by causing a different pitch between the first variable-pitch propeller and the second variable-pitch propeller.

17. The method of any of the preceding claims 13-16, wherein in the event of a failure of a propulsive unit, or in the event of a collision with an external object, the power of the first propulsive unit is reduced and/or the power of the second propulsive unit is increased to keep the sideslip angle, $\beta$, substantially equal to zero.

18. The method of any of the preceding claims 13-17, wherein the distributed electric propulsion fixed-wing aircraft (10) is operated to train a pilot on board thereof to fly with a fixed-wing aircraft equipped with a single propeller, such as in a single-engine airplane, while the pilot is flying with said distributed electric propulsion fixed-wing aircraft (10).

19. The method of any of the preceding claims 13-18, wherein the control unit (EPMS) is configured to:

exit from an accidental spin using a differential management of the propulsive units upon selection of a proper option by a pilot on board; and/or
simulate a turn response of a single-engine aircraft by a differential power between at least one of said first propulsive units and at least one of said second propulsive units; and/or
simulate the operating mode of a traditional thermal engine or a turbofan or turboprop engine by introducing a delay and/or an irregularity in the delivery of power and/or by decreasing power with the increase in altitude.

**Patentansprüche**

1. Starrflügelflugzeug (10) mit verteiltem elektrischen Antrieb, das eine Vielzahl von elektrischen Antriebseinheiten (EM1-EM6; EM1-EM4; EM1-EM11) und eine Längsebene aufweist,

wobei die elektrischen Antriebseinheiten (EM1-EM6; EM1-EM4; EM1-EM11) symmetrisch in Bezug auf die Längsebene angeordnet sind,
wobei die elektrischen Antriebseinheiten (EM1-EM6; EM1-EM4) erste Antriebseinheiten an einer ersten Seite der Längsebene und zweite Antriebseinheiten an einer zweiten Seite der Längsebene umfassen,
wobei das Flugzeug (10) mit verteiltem Antrieb ferner eine Steuereinheit (EPMS) umfasst, die so konfiguriert ist, dass sie ein Giermoment bereitstellt, so dass ein Schiebewinkel $\beta$ erzeugt wird, so dass das Flugzeug (10) mit verteiltem elektrischen Antrieb wie ein Starrflügler fliegt, der mit einem einzelnen Propeller ausgestattet ist, wobei die Steuereinheit (EPMS) so konfiguriert ist, dass sie den Betriebsmodus eines herkömmlichen thermischen Triebwerks oder eines Turbofan- oder Turboprop-Triebwerks simuliert, indem sie eine Verzögerung und/oder eine Unregelmäßigkeit in der Leistungsabgabe einführt und/oder indem sie die Leistung mit der Zunahme der Höhe verringert.

2. Starrflügelflugzeug (10) mit verteiltem elektrischen Antrieb nach Anspruch 1, wobei das Giermoment dadurch erzeugt wird, dass eine unterschiedliche Leistung zwischen mindestens einer der ersten Antriebseinheiten und einer entsprechenden mindestens einen der zweiten Antriebseinheiten bewirkt wird.

3. Starrflügelflugzeug (10) mit verteiltem elektrischen Antrieb nach Anspruch 1 oder 2, wobei mindestens eine der ersten Antriebseinheiten Folgendes umfasst mindestens eine der ersten Antriebseinheiten einen ersten Faltpropeller umfasst und mindestens eine der zweiten Antriebseinheiten einen zweiten Faltpropeller umfasst, und wobei das Giermoment erzeugt wird, indem ein unterschiedliches Schließen zwischen dem ersten Faltpropeller und dem zweiten Faltpropeller bewirkt wird.

4. Starrflügelflugzeug (10) mit verteiltem elektrischem Antrieb nach Anspruch 1, 2 oder 3, wobei mindestens eine der ersten Antriebseinheiten einen ersten Verstellpropeller umfasst und mindestens eine der zweiten Antriebseinheiten einen zweiten Verstellpropeller umfasst, und wobei das Giermoment erzeugt wird, indem eine unterschiedliche Steigung zwischen dem ersten Verstellpropeller und dem zweiten Verstellpropeller bewirkt wird.

5. Starrflügelflugzeug (10) mit verteiltem elektrischem Antrieb nach einem der vorhergehenden Ansprüche, wobei die Steuereinheit (EPMS) so konfiguriert ist, dass sie im Falle eines Ausfalls einer Antriebseinheit oder im Falle einer Kollision mit einem externen Objekt die Leistung der ersten Antriebseinheit reduziert und/oder die Leistung der zweiten Antriebseinheit erhöht, um den Schiebewinkel β im Wesentlichen gleich Null zu halten.

6. Starrflügelflugzeug (10) mit verteiltem elektrischem Antrieb nach einem der vorhergehenden Ansprüche, das außerdem ein Batteriepaket (BP) und optional ein Energieerzeugungssystem (PGS) zum Laden des Batteriepakets umfasst.

7. Starrflügelflugzeug (10) mit verteiltem elektrischem Antrieb nach einem der vorhergehenden Ansprüche, das außerdem eine Trägheitsmesseinheit (IMU) umfasst, die mit der Steuereinheit (EPMS) zusammenarbeitet.

8. Starrflügelflugzeug (10) mit verteiltem elektrischem Antrieb nach einem der vorhergehenden Ansprüche, das so konfiguriert ist, dass es einen Piloten an Bord für das Fliegen mit einem Starrflügelflugzeug ausbildet, das mit einem einzelnen Propeller ausgestattet ist, wie z.B. in einem einmotorigen Flugzeug, während der Pilot mit dem Starrflügelflugzeug (10) mit verteiltem elektrischem Antrieb fliegt.

9. Starrflügelflugzeug (10) mit verteiltem elektrischem Antrieb nach einem der vorhergehenden Ansprüche, das zwei Steuereinheiten (EPMS1, EPMS2) in einer zusammenwirkenden Konfiguration umfasst, wobei eine erste Steuereinheit (EPMS1) mit einer ersten Gruppe von Antriebseinheiten (EM1, EM4, EM5) verbunden ist und eine zweite Steuereinheit (EPMS2) mit einer zweiten Gruppe von Antriebseinheiten (EM2, EM3, EM6) verbunden ist und wobei die erste und die zweite Steuereinheit (EPMS1, EPMS2) miteinander verbunden sind.

10. Starrflügelflugzeug (10) mit verteiltem elektrischem Antrieb nach einem der Ansprüche 1 bis 8, das zwei Steuereinheiten (EPMS1, EPMS2) in einer redundanten Konfiguration umfasst, wobei eine erste Steuereinheit (EPMS1) mit allen Antriebseinheiten (EM1-EM6) verbunden ist und die zweite Steuereinheit (EPMS2) mit allen Antriebseinheiten (EM1-EM6) verbunden ist und wobei die erste und die zweite Steuereinheit (EPMS1, EPMS2) miteinander verbunden sind.

11. Starrflügelflugzeug (10) mit verteiltem elektrischem Antrieb nach einem der vorhergehenden Ansprüche, wobei die Steuereinheit (EPMS) so konfiguriert ist, dass sie aus einem unbeabsichtigten Trudeln unter Verwendung einer Differenzsteuerung der Antriebseinheiten nach Auswahl einer geeigneten Option durch einen Piloten an Bord aussteigt.

12. Starrflügelflugzeug (10) mit verteiltem elektrischem Antrieb nach einem der vorhergehenden Ansprüche, wobei die Steuereinheit (EPMS) so konfiguriert ist, dass sie ein Kurvenverhalten eines einmotorigen Flugzeugs durch eine Leistungsdifferenz zwischen mindestens einer der ersten Antriebseinheiten und mindestens einer der zweiten Antriebseinheiten simuliert.

13. Verfahren zum Betreiben eines Starrflügelflugzeugs (10) mit verteiltem elektrischem Antrieb, so dass das Starrflügelflugzeug (10) mit verteiltem Antrieb wie ein Starrflügelflugzeug mit einer einzigen Antriebseinheit fliegt,

    wobei das Flugzeug (10) mit verteiltem elektrischem Antrieb eine Vielzahl von elektrischen Antriebseinheiten (EM1-EM6; EM1-EM4; EM1-EM11) und eine Längsebene umfasst,
    wobei die elektrischen Antriebseinheiten (EM1-EM6; EM1-EM4; EM1-EM11) symmetrisch in Bezug auf die Längsebene angeordnet sind,
    wobei die elektrischen Antriebseinheiten (EM1-EM6; EM1-EM4) erste Antriebseinheiten an einer ersten Seite der Längsebene und zweite Antriebseinheiten an einer zweiten Seite der Längsebene aufweisen,
    wobei das Flugzeug (10) mit verteiltem elektrischen Antrieb ferner eine Steuereinheit (EPMS) umfasst,
    wobei das Verfahren das Bereitstellen eines Giermoments umfasst, so dass ein Schiebewinkel β erzeugt wird,
    wobei die Steuereinheit (EPMS) so konfiguriert ist, dass sie den Betriebsmodus eines herkömmlichen thermischen Triebwerks oder eines Turbofan- oder Turboprop-Triebwerks simuliert, indem sie eine Verzögerung und/oder eine Unregelmäßigkeit in der Leistungsabgabe einführt und/oder indem sie die Leistung mit der Zunahme der Höhe verringert.

14. Verfahren nach Anspruch 13, wobei das Giermoment dadurch erzeugt wird, dass eine unterschiedliche Leistung zwischen mindestens einer der ersten Antriebseinheiten und einer entsprechenden mindestens einen der zweiten Antriebseinheiten bewirkt wird.

15. Verfahren nach Anspruch 13 oder 14, wobei mindestens eine der ersten Antriebseinheiten einen ersten Faltpropeller umfasst und mindestens eine der zweiten Antriebseinheiten einen zweiten Faltpropeller umfasst, und wobei das Giermoment erzeugt wird, indem ein unterschiedliches Schließen zwischen dem ersten Faltpropeller und dem zweiten Faltpropeller bewirkt wird.

16. Verfahren nach Anspruch 13, 14 oder 15, wobei mindestens eine der ersten Antriebseinheiten einen ersten Verstellpropeller umfasst und mindestens eine der zweiten Antriebseinheiten einen zweiten Verstellpropeller umfasst, und wobei das Giermoment erzeugt wird, indem eine unterschiedliche Steigung zwischen dem ersten Verstellpropeller und dem zweiten Verstellpropeller bewirkt wird.

17. Verfahren nach einem der vorhergehenden Ansprüche 13-16, wobei im Falle eines Ausfalls einer Antriebseinheit oder im Falle einer Kollision mit einem externen Objekt die Leistung der ersten Antriebseinheit reduziert und/oder die Leistung der zweiten Antriebseinheit erhöht wird, um den Schwimmwinkel β im Wesentlichen gleich Null zu halten.

18. Verfahren nach einem der vorhergehenden Ansprüche 13-17, wobei das Starrflügelflugzeug (10) mit verteiltem elektrischem Antrieb betrieben wird, um einen Piloten an Bord desselben zu trainieren, mit einem Starrflügelflugzeug zu fliegen, das mit einem einzelnen Propeller ausgestattet ist, wie beispielsweise in einem einmotorigen Flugzeug, während der Pilot mit dem Starrflügelflugzeug (10) mit verteiltem elektrischem Antrieb fliegt.

19. Verfahren nach einem der vorhergehenden Ansprüche 13-18, wobei die Steuereinheit (EPMS) so konfiguriert ist, dass sie: ein unbeabsichtigtes Trudeln unter Verwendung einer Differenzsteuerung der Antriebseinheiten nach Auswahl einer geeigneten Option durch einen Piloten an Bord zu verlassen; und/oder ein Kurvenverhalten eines einmotorigen Flugzeugs durch eine Leistungsdifferenz zwischen mindestens einer der ersten Antriebseinheiten und mindestens einer der zweiten Antriebseinheiten zu simulieren; und/oder den Betriebsmodus eines herkömmlichen thermischen Triebwerks oder eines Turbofan- oder Turboprop-Triebwerks zu simulieren, indem eine Verzögerung und/oder eine Unregelmäßigkeit bei der Leistungsabgabe eingeführt wird und/oder indem die Leistung mit der Zunahme der Höhe abnimmt.

## Revendications

1. Avion à voilure fixe à propulsion électrique distribuée (10) comprenant une pluralité d'unités de propulsion électriques (EM1-EM6 ; EM1-EM4 ; EM1-EM11) et un plan longitudinal ;

   dans lequel les unités de propulsion électriques (EM1-EM6 ; EM1-EM4 ; EM1-EM11) sont agencées symétriquement par rapport au plan longitudinal ;
   dans lequel les unités de propulsion électriques (EM1-EM6 ; EM1-EM4) comprennent des premières unités de propulsion sur un premier côté du plan longitudinal et des deuxièmes unités de propulsion sur un deuxième côté du plan longitudinal ;
   dans lequel l'avion à voilure fixe à propulsion électrique distribuée (10) comprend en outre une unité de commande (EPMS) configurée de manière à fournir un moment de lacet de sorte qu'un angle de dérapage, β, est généré, de sorte que l'avion à voilure fixe à propulsion électrique distribuée (10) vole comme un avion à voilure fixe équipé d'une seule hélice ; et
   dans lequel l'unité de commande (EPMS) est configurée de manière à simuler le mode de fonctionnement d'un moteur thermique traditionnel ou d'un turboréacteur à double flux ou d'un turbopropulseur en introduisant un retard et/ou une irrégularité dans la fourniture de puissance et/ou en diminuant la puissance à mesure que l'altitude augmente.

2. Avion à voilure fixe à propulsion électrique distribuée (10) selon la revendication 1, dans lequel le moment de lacet est fourni en occasionnant une puissance différente entre au moins une des premières unités de propulsion et au moins une unité de propulsion correspondante des deuxièmes unités de propulsion.

3. Avion à voilure fixe à propulsion électrique distribuée (10) selon la revendication 1 ou 2, dans lequel au moins une des premières unités de propulsion comprend une première hélice repliable et au moins une des deuxièmes unités de propulsion comprend une deuxième hélice repliable, et dans lequel le moment de lacet est fourni en occasionnant une fermeture différente entre la première hélice repliable et la deuxième hélice repliable.

4. Avion à voilure fixe à propulsion électrique distribuée (10) selon la revendication 1, 2 ou 3, dans lequel au moins une des premières unités de propulsion comprend une première hélice à pas variable et au moins une des deuxièmes unités de propulsion comprend une deuxième hélice à pas variable, et dans lequel le moment de lacet est fourni en occasionnant un pas différent entre la première hélice à pas variable et la deuxième hélice à pas variable.

5. Avion à voilure fixe à propulsion électrique distribuée (10) selon l'une quelconque des revendications précédentes, dans lequel, en cas de défaillance d'une unité de propulsion, ou en cas de collision avec un objet extérieur, l'unité de commande (EPMS) est configurée de manière à réduire la puissance de la première unité de propulsion et/ou à augmenter la puissance de la deuxième unité de propulsion, afin de maintenir l'angle de dérapage, β, sensiblement égal à zéro.

6. Avion à voilure fixe à propulsion électrique distribuée (10) selon l'une quelconque des revendications précédentes, comprenant en outre un bloc-batterie (BP) et, facultativement, un système de production d'énergie (PGS) destiné à charger le bloc-batterie.

7. Avion à voilure fixe à propulsion électrique distribuée (10) selon l'une quelconque des revendications précédentes, comprenant en outre une unité de mesure inertielle (IMU) coopérant avec ladite unité de commande (EPMS).

8. Avion à voilure fixe à propulsion électrique distribuée (10) selon l'une quelconque des revendications précédentes, configuré de manière à entraîner un pilote à bord de celui-ci à voler avec un avion à voilure fixe équipé d'une seule hélice, tel que dans un avion monomoteur, tandis que le pilote vole avec ledit avion à voilure fixe à propulsion électrique distribuée (10).

9. Avion à voilure fixe à propulsion électrique distribuée (10) selon l'une quelconque des revendications précédentes, comprenant deux unités de commande (EPMS1, EPMS2) dans une configuration de coopération, dans lesquelles une première unité de commande (EPMS1) est reliée à un premier groupe d'unités de propulsion (EM1, EM4, EM5) et une deuxième unité de commande (EPMS2) est reliée à un deuxième groupe d'unités de propulsion (EM2, EM3, EM6), et dans lesquelles les première et deuxième unités de commande (EPMS1 , EPMS2) sont reliées entre elles.

10. Avion à voilure fixe à propulsion électrique distribuée (10) selon l'une quelconque des revendications 1 à 8, comprenant deux unités de commande (EPMS1, EPMS2) dans une configuration redondante, dans laquelle une première unité de commande (EPMS1) est reliée à toutes les unités de propulsion (EM1-EM6) et la deuxième unité de commande (EPMS2) est reliée à toutes les unités de propulsion (EM1-EM6), et dans lesquelles les première et deuxième unités de commande (EPMS1, EPMS2) sont reliées entre elles.

11. Avion à voilure fixe à propulsion électrique distribuée (10) selon l'une quelconque des revendications précédentes, dans lequel l'unité de commande (EPMS) est configurée de manière à sortir d'une vrille involontaire en utilisant une gestion différentielle des unités de propulsion par la sélection d'une option appropriée par un pilote à bord.

12. Avion à voilure fixe à propulsion électrique distribuée (10) selon l'une quelconque des revendications précédentes, dans lequel l'unité de commande (EPMS) est configurée de manière à simuler une réponse en virage d'un avion monomoteur par une puissance différentielle entre au moins l'une desdites premières unités de propulsion et au moins l'une desdites deuxièmes unités de propulsion.

13. Procédé pour faire fonctionner un avion à voilure fixe à propulsion électrique distribuée (10) de sorte que l'avion à voilure fixe à propulsion électrique distribuée (10) vole comme un avion à voilure fixe à une seule unité de propulsion,

dans lequel l'avion à voilure fixe à propulsion électrique distribuée (10) comprend une pluralité d'unités de propulsion électriques (EM1-EM6 ; EM1-EM4 ; EM1-EM11) et un plan longitudinal ;
dans lequel les unités de propulsion électriques (EM1-EM6 ; EM1-EM4 ; EM1-EM11) sont agencées symétriquement par rapport au plan longitudinal ;
dans lequel les unités de propulsion électriques (EM1-EM6 ; EM1-EM4) comprennent des premières unités de propulsion sur un premier côté du plan longitudinal et des deuxièmes unités de propulsion sur un deuxième côté du plan longitudinal ;
dans lequel l'avion à voilure fixe à propulsion électrique distribuée (10) comprend en outre une unité de commande (EPMS) ;
dans lequel le procédé comprend le fait de fournir un moment de lacet de sorte qu'un angle de dérapage, β, est généré ; et
dans lequel l'unité de commande (EPMS) est configurée de manière à simuler le mode de fonctionnement d'un moteur thermique traditionnel ou d'un turboréacteur à double flux ou d'un turbopropulseur en introduisant un retard et/ou une irrégularité dans la fourniture de puissance et/ou en diminuant la puissance à mesure que l'altitude augmente.

14. Procédé selon la revendication 13, dans lequel le moment de lacet est fourni en occasionnant une puissance différente entre au moins une des premières unités de propulsion et au moins une unité de propulsion correspondante des deuxièmes unités de propulsion.

15. Procédé selon la revendication 13 ou 14, dans lequel au moins une des premières unités de propulsion comprend une première hélice repliable et au moins une des deuxièmes unités de propulsion comprend une deuxième hélice repliable, et dans lequel le moment de lacet est fourni en occasionnant une fermeture différente entre la première hélice repliable et la deuxième hélice repliable.

16. Procédé selon la revendication 13, 14 ou 15, dans lequel au moins une des premières unités de propulsion comprend une première hélice à pas variable et au moins une des deuxièmes unités de propulsion comprend une deuxième hélice à pas variable, et dans lequel le moment de lacet est fourni en occasionnant un pas différent entre la première hélice à pas variable et la deuxième hélice à pas variable.

17. Procédé selon l'une quelconque des revendications précédentes 13 à 16, dans lequel, en cas de défaillance d'une unité de propulsion, ou en cas de collision avec un objet extérieur, la puissance de la première unité de propulsion est réduite et/ou la puissance de la deuxième unité de propulsion est augmentée, afin de maintenir l'angle de dérapage, $\beta$, sensiblement égal à zéro.

18. Procédé selon l'une quelconque des revendications précédentes 13 à 17, dans lequel l'avion à voilure fixe à propulsion électrique distribuée (10) est exploité pour entraîner un pilote à bord de celui-ci à voler avec un avion à voilure fixe équipé d'une seule hélice, tel que dans un avion monomoteur, tandis que le pilote vole avec ledit avion à voilure fixe à propulsion électrique distribuée (10).

19. Procédé selon l'une quelconque des revendications précédentes 13 à 18, dans lequel l'unité de commande (EPMS) est configurée de manière à :

sortir d'une vrille involontaire en utilisant une gestion différentielle des unités de propulsion par la sélection d'une option appropriée par un pilote à bord ; et/ou
simuler une réponse en virage d'un avion monomoteur par une puissance différentielle entre au moins l'une desdites premières unités de propulsion et au moins l'une desdites deuxièmes unités de propulsion ; et/ou
simuler le mode de fonctionnement d'un moteur thermique traditionnel ou d'un turboréacteur à double flux ou d'un turbopropulseur en introduisant un retard et/ou une irrégularité dans la fourniture de puissance et/ou en diminuant la puissance à mesure que l'altitude augmente.

Fig. 1

EP 4 146 544 B1

Fig. 2

EP 4 146 544 B1

Fig. 3

Fig. 4

Fig. 5

EP 4 146 544 B1

Fig. 6a

Fig. 6b

Pilot Input: working mode

Pilot Input: $\delta_T$
$\delta_A, \delta_R, \delta_E$

SE Mode
Normal Situation

Cockpit output:
SE mode displayed

Situation to be achieved:
$\beta \approx 2°$ for $\delta_T > 90\%$

Situation to be achieved:
$\beta \approx 0°$ for $50\% < \delta_T < 90\%$

Situation to be achieved:
$\beta \approx -2°$ for $\delta_T < 20\%$

$EM_1 = \delta_T \cdot 1.05$
$EM_2 = \delta_T \cdot 1$
$EM_3 = \delta_T \cdot 1$
$EM_4 = \delta_T \cdot 1$
$EM_5 = \delta_T \cdot 1$

$EM_6 = \delta_T \cdot 0.95$

$EM_1 = \delta_T \cdot 1$
$EM_2 = \delta_T \cdot 1$
$EM_3 = \delta_T \cdot 1$
$EM_4 = \delta_T \cdot 1$
$EM_5 = \delta_T \cdot 1$
$EM_6 = \delta_T \cdot 1$

$EM_1 = \delta_T \cdot 0.95$
$EM_2 = \delta_T \cdot 1$
$EM_3 = \delta_T \cdot 1$
$EM_4 = \delta_T \cdot 1$
$EM_5 = \delta_T \cdot 1$

$EM_6 = \delta_T \cdot 1.05$

Settings constant up to a modality or situation change

Fig. 7

Pilot Input: working mode

Pilot Input: $\delta_T$
$\delta_A, \delta_E, \delta_R$

**SE Mode**
**Emergency Situation**

Cockpit output:
SE mode displayed
Short emergency description

---

EPMS Failure

Other EPMS Failure

Prop or EM failure
Connection lost, RPM & current comparison. Priority to $\beta \approx 0$

---

Hazardous Failure

Minor Failure

Connection lost, inconsistent or damaged data

1 EM Inoperative

Inner EM | Central EM | Outer EM

---

Communication to the other EPMS unit. Total unit shutdown

Communication to the other EPMS unit. Downgraded working mode

Situation to be achieved: Priority to total power available, $\beta \approx 0$

---

| Inner EM | Central EM | Outer EM |
|---|---|---|
| $EM_1 = \delta_T \cdot 1$ | $EM_1 = \delta_T \cdot 1$ | $EM_1 = \delta_T \cdot 0$ |
| $EM_2 = \delta_T \cdot 1$ | $EM_2 = \delta_T \cdot 0$ | $EM_2 = \delta_T \cdot 1.4$ |
| $EM_3 = \delta_T \cdot 0$ | $EM_3 = \delta_T \cdot 1$ | $EM_3 = \delta_T \cdot 1.4$ |
| $EM_4 = \delta_T \cdot 1$ | $EM_4 = \delta_T \cdot 1$ | $EM_4 = \delta_T \cdot 21/30$ |
| $EM_5 = \delta_T \cdot 1$ | $EM_5 = \delta_T \cdot 1$ | $EM_5 = \delta_T \cdot 21/30$ |
| $EM_6 = \delta_T \cdot 2/3$ | $EM_6 = \delta_T \cdot 2/3$ | $EM_6 = \delta_T \cdot 21/30$ |

**Hazardous Failure**
$EM_1 = \delta_T \cdot 0$
$EM_2 = \delta_T \cdot 1$
$EM_3 = \delta_T \cdot 1$
$EM_4 = \delta_T \cdot 0$
$EM_5 = \delta_T \cdot 0$
$EM_6 = \delta_T \cdot 1$

**Minor Failure**
$EM_1 = \delta_T \cdot 1$
$EM_2 = \delta_T \cdot 1$
$EM_3 = \delta_T \cdot 1$
$EM_4 = \delta_T \cdot 1$
$EM_5 = \delta_T \cdot 1$
$EM_6 = \delta_T \cdot 1$

**Connection lost**
$EM_1 = \delta_T \cdot 1$
$EM_2 = \delta_T \cdot 0$
$EM_3 = \delta_T \cdot 0$
$EM_4 = \delta_T \cdot 1$
$EM_5 = \delta_T \cdot 1$
$EM_6 = \delta_T \cdot 0$

Data from IMU for instant thrust correction for $\beta \approx 0$

---

2 EM Inoperative

3 EM Inoperative

6 EM Inoperative

---

Same side | Opposite side

Same side

---

**Same side**
$EM_1 = \delta_T \cdot 0$
$EM_2 = \delta_T \cdot 0$
$EM_3 = \delta_T \cdot 1.5$
$EM_4 = \delta_T \cdot 1.5$
$EM_5 = \delta_T \cdot 0$
$EM_6 = \delta_T \cdot 0$

**Opposite side**
$EM_1 = \delta_T \cdot 0$
$EM_2 = \delta_T \cdot 1.5$
$EM_3 = \delta_T \cdot 1.5$
$EM_4 = \delta_T \cdot 0$
$EM_5 = \delta_T \cdot 1.5$
$EM_6 = \delta_T \cdot 0.5$

**3 EM Same side**
If total thrust is not enough
$EM_1 = \delta_T \cdot 0$
$EM_2 = \delta_T \cdot 0$
$EM_3 = \delta_T \cdot 0$
$EM_4 = \delta_T \cdot 1.5$
$EM_5 = \delta_T \cdot 1.5$
$EM_6 = \delta_T \cdot 1.5$
$\delta_R, \delta_A$

**6 EM Inoperative**
$EM_1 = \delta_T \cdot 0$
$EM_2 = \delta_T \cdot 0$
$EM_3 = \delta_T \cdot 0$
$EM_4 = \delta_T \cdot 0$
$EM_5 = \delta_T \cdot 0$
$EM_6 = \delta_T \cdot 0$

EPMS disengaged from control surfaces deflection

**2 EM Same side**
If total thrust is not enough
$EM_1 = \delta_T \cdot 0$
$EM_2 = \delta_T \cdot 0$
$EM_3 = \delta_T \cdot 1.5$
$EM_4 = \delta_T \cdot 1.5$
$EM_5 = \delta_T \cdot 1$
$EM_6 = \delta_T \cdot 1$
$\delta_R, \delta_A$

Data from IMU for instant thrust correction for $\beta \approx 0$

**Fig. 8**

Pilot Input: working mode

Pilot Input: $\delta_{T1}$, $\delta_{T2}$
$\delta_A$, $\delta_E$, $\delta_R$

ME Mode

Normal Situation

Cockpit output:
ME mode displayed

Direct control law

$EM_1 = \delta_{T1} \cdot 1$

$EM_2 = \delta_{T1} \cdot 1$

$EM_3 = \delta_{T1} \cdot 1$

$EM_4 = \delta_{T2} \cdot 1$

$EM_5 = \delta_{T2} \cdot 1$

$EM_6 = \delta_{T2} \cdot 1$

<u>Fig. 9</u>

Pilot Input: working mode

Pilot Input: $\delta_{T1}, \delta_{T2}$
$\delta_A, \delta_E, \delta_R$

ME Mode

Emergency Situation

Cockpit output:
ME mode displayed
Short emergency description

Same strategies as
SE emergency
situation

Pilot override:
Direct control law

$EM_1 = \delta_{T1} \cdot 1$

$EM_2 = \delta_{T1} \cdot 1$

$EM_3 = \delta_{T1} \cdot 1$

$EM_4 = \delta_{T2} \cdot 1$

$EM_5 = \delta_{T2} \cdot 1$

$EM_6 = \delta_{T2} \cdot 1$

Fig. 10

Fig. 11

**EP 4 146 544 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180305033 A
- US 20100305826 A
- EP 2701976 A1
- WO 2019006469 A1
- WO 2014053057 A1
- US 9751614 B1
- US 2016297520 A1
- US 2002133322 A1